# FASCICULE DE BREVET EUROPEEN

(11) **EP 3 959 063 B1**
(45) Date de publication et mention de la délivrance du brevet: **25.10.2023**
(21) Numéro de dépôt: 20720376.1
(22) Date de dépôt: 08.04.2020
(51) Int. Cl.: B29C 64/118, B29C 64/106, B33Y 30/00, B33Y 40/00, B29C 64/209

(54) **TETE D'EXTRUSION POUR FABRICATION ADDITIVE, SYSTEME ET PROCEDE DE FABRICATION ADDITIVE**
EXTRUSIONSKOPF FÜR ADDITIVE HERSTELLUNG, SYSTEM UND VERFAHREN FÜR ADDITIVE HERSTELLUNG
EXTRUSION HEAD FOR ADDITIVE MANUFACTURE, SYSTEM AND METHOD FOR ADDITIVE MANUFACTURE

(30) Priorité: 23.04.2019 CA 3041017
(43) Date de publication de la demande: 02.03.2022
(73) Titulaire: SAFRAN, 75015 Paris (FR)
(72) Inventeur: PICCIRELLI, Nicola, 77550 Moissy-Cramayel (FR); BAZIN, Benoît, 77550 Moissy-Cramayel (FR); THERRIAULT, Daniel, Québec H4R 3 (CA); LAFRANCE, Thierry, Montréal, Québec H2L 3M6 (CA); TRUDEAU LALONDE, Francis, Montréal, Québec H2L 3M6 (CA)
(74) Mandataire: Cabinet Beau de Loménie
(86) Numéro de dépôt international: PCT/EP2020/059971
(87) Numéro de publication internationale: WO 2020/216618

(56) Documents cités:
- WO-A1-2017/152109
- WO-A1-2018/200518
- US-A1- 2017 157 828

## Description

### Domaine Technique

La présente invention concerne le domaine de la fabrication additive d'une pièce ou d'un revêtement par dépôt de filaments de matière juxtaposés les uns par rapport aux autres.

### Technique antérieure

La fabrication additive ou impression par dépôt de filaments d'un revêtement ou d'une pièce consiste à extruder et à déposer des filaments de matière en les juxtaposant les uns par rapport aux autres, et ce sur une ou plusieurs couches.

Une des techniques de ce type de fabrication utilise des matériaux préalablement fondus, tels qu'un matériau thermoplastique, et est connue sous le nom d'impression par dépôt de filament fondu ou FDM (pour « Fused Déposition Modeling »). Un procédé et un appareil de mise en oeuvre de cette technique sont notamment divulgués dans le document US 5 121 329.

Cette technique de fabrication additive peut également être mise en oeuvre avec des matériaux plus visqueux tels que des matériaux thermodurcissables qui sont déposés sous forme de fils ou filaments adjacents et qui sont ensuite polymérisés en étuve.

Cependant, dans le cas de matériaux visqueux, la vitesse de dépôt d'un fil ou d'un filament est relativement lente. Le temps de fabrication d'une pièce ou d'un revêtement à partir de filaments d'un tel matériau est donc très long.

En outre, dans le cas notamment d'un revêtement, l'épaisseur de la ou des couches à former peut être faible, ce qui nécessite de déposer des filaments présentant un faible diamètre. Or, si le filament déposé a un faible diamètre, le temps pour former une couche de matière par juxtaposition de filaments sera encore allongé.

Il existe, par conséquent, un besoin pour former des revêtements ou des pièces par fabrication additive par dépôt de filaments juxtaposés avec des temps de fabrication réduits, et ce même en déposant des filaments ayant un faible diamètre.

US 2017/157828 A1, WO 2018/200518 A1 et WO 2017/152109 A1 divulguent une tête d'impression selon le préambule de la revendication 1.

### Exposé de l'invention

A cet effet, la présente invention propose une tête d'extrusion pour fabrication additive comprenant une enceinte délimitant une chambre d'alimentation, l'enceinte comportant au moins un port d'entrée débouchant dans la chambre d'alimentation et configuré pour recevoir un matériau à extruder sous pression et une pluralité de buses d'extrusion, chaque buse étant en communication avec ladite chambre d'alimentation et débouchant à l'extérieur de l'enceinte via un orifice de sortie, les buses de la pluralité de buses étant disposées adjacentes les unes par rapport aux autres avec un espacement déterminé entre chaque orifice de sortie de buse et la pluralité de buses est présente sur un élément amovible de l'enceinte.

La tête d'extrusion de l'invention permet de déposer simultanément plusieurs filaments adjacents de matériau de manière à former une bande de matériau en un seul passage. Le temps de fabrication d'une pièce ou d'un revêtement par fabrication additive est ainsi grandement réduit.

Selon une caractéristique particulière de la tête d'extrusion de l'invention, chaque buse de la pluralité de buses comporte un canal d'extrusion en communication directe avec la chambre d'alimentation, le canal d'extrusion comportant une partie ayant une section de passage se rétrécissant progressivement jusqu'à l'orifice de sortie. Avec cette géométrie, les canaux d'extrusion permettent notamment d'uniformiser les débits de matériau extrudé par les orifices de sortie et d'améliorer l'homogénéité des filaments déposés simultanément.

Selon une autre caractéristique particulière de la tête d'extrusion de l'invention, l'orifice de sortie de chaque buse présente une largeur comprise entre 50 µm et 700 µm. Il est ainsi possible d'ajuster la taille des filaments extrudés ainsi que l'épaisseur de la bande de matériau déposée.

Selon une autre caractéristique particulière de la tête d'extrusion de l'invention, la distance entre deux orifices de sortie adjacents est comprise entre 50 µm et 700 µm.

Il est ainsi possible de contrôler l'épaisseur de la bande de matériau déposée en ajustant l'espace d'étalement entre les filaments.

La pluralité de buses présente sur l'élément amovible de l'enceinte permet de faciliter le nettoyage des buses d'extrusion notamment en cas de bouchage de celles-ci.

L'invention a également pour objet un système de fabrication additive par extrusion comprenant un dispositif de délivrance sous pression d'un matériau et une tête d'extrusion selon l'invention reliée au dispositif de délivrance, le dispositif de délivrance étant configuré pour injecter sous pression un matériau à extruder dans la chambre d'alimentation de la tête d'extrusion.

L'invention a encore pour objet un procédé de fabrication additive comprenant l'injection sous pression d'un matériau à extruder dans une chambre d'alimentation d'une tête d'extrusion selon l'invention et le dépôt d'une pluralité de filaments adjacents les uns aux autres par la tête d'extrusion, la pluralité de filaments formant une bande ayant une largeur correspondant sensiblement à la largeur sur laquelle s'étend la pluralité de buses d'extrusion de la tête d'extrusion.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1A et 1B sont des vues schématiques en perspective d'une tête d'extrusion conformément à un mode de réalisation de l'invention,
- la figure 2 est une vue schématique en perspective éclatée de la tête d'extrusion des figures 1A et 1B,
- la figure 3 est une vue schématique en coupe de la tête d'extrusion des figures 1A et 1B,
- la figure 4 est une vue schématique en perspective montrant la sortie de distribution de la tête d'extrusion des figures 1A et 1B,
- la figure 5 est une vue schématique en perspective d'un système de fabrication additive muni de la tête d'extrusion des figures 1A et 1B,
- la figure 6 est une vue schématique en perspective montrant le dépôt simultané d'une bande de filaments par la tête d'extrusion des figures 1A et 1B.

### Description des modes de réalisation

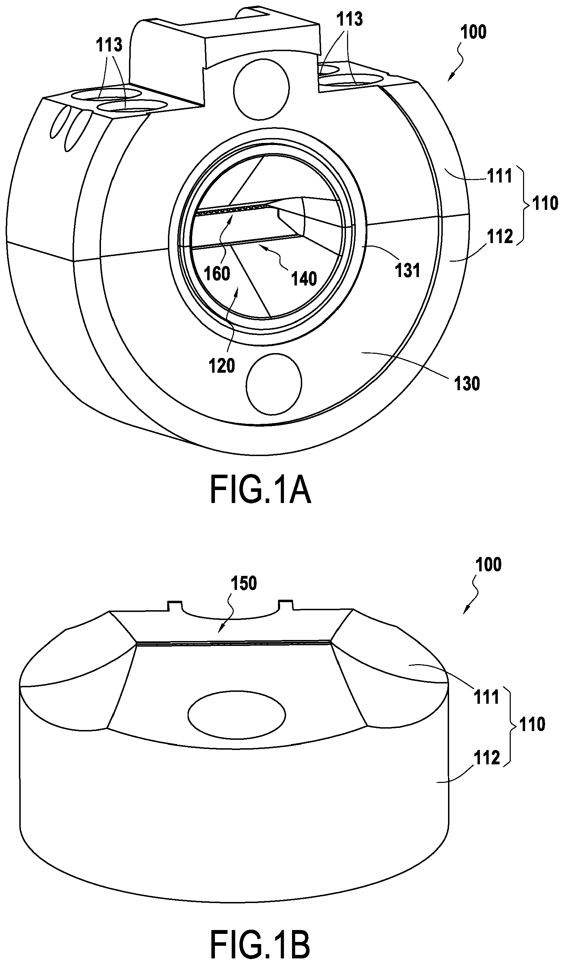

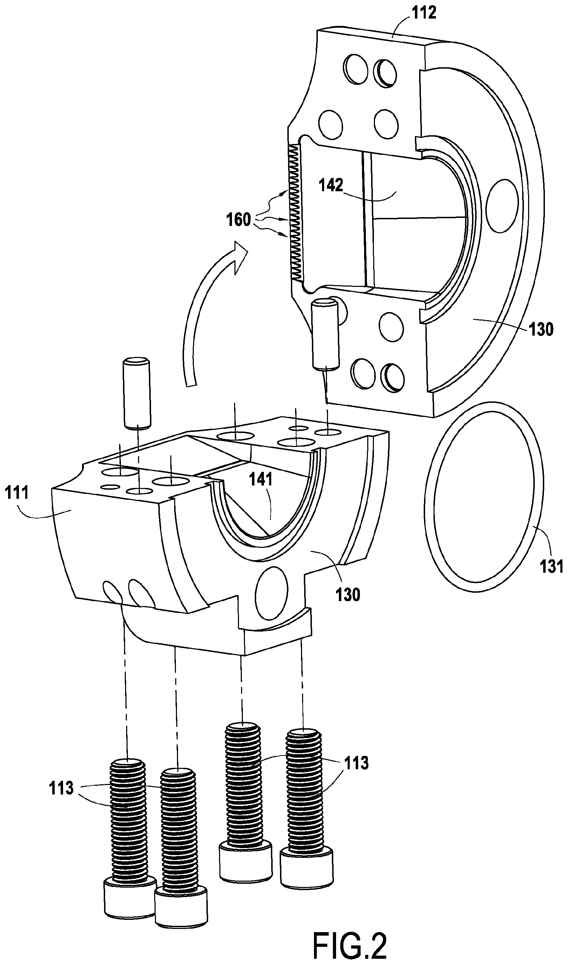

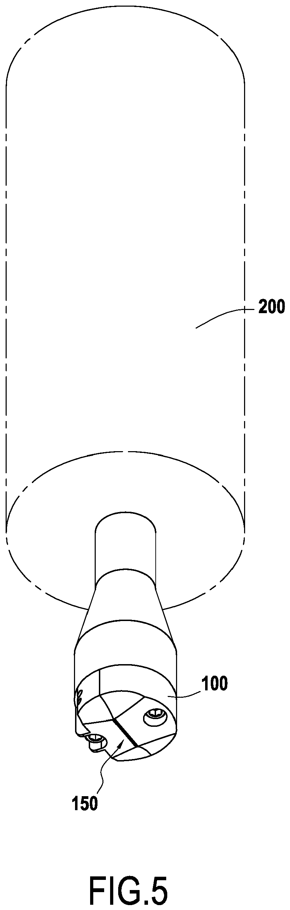

Les figures 1A, 1B et 2 montrent une tête d'extrusion 100 pour fabrication additive conformément à une mode de réalisation de l'invention. La tête d'extrusion 100 comprend une enceinte 110 constituée dans l'exemple décrit ici par des première et deuxième parties semi-annulaires 111 et 112 fixées entre elles par des vis de serrage 113. L'enceinte 110 peut être notamment réalisée en acier. La tête d'extrusion 100 comporte dans sa partie supérieure un port d'entrée 120 entouré d'une embase de fixation 130. Le port d'entrée 120 est destiné à être relié à une sortie d'un dispositif d'alimentation 200 (figure 5) configuré pour alimenter la tête d'extrusion avec un matériau à extruder sous pression. La tête est fixée de manière hermétique au dispositif d'alimentation 200 via l'embase de fixation 130 avec interposition d'un joint d'étanchéité haute pression 131.

L'enceinte 110 délimite une chambre d'alimentation 140 qui s'étend entre le port d'entrée 120 et une sortie de distribution 150. Plus précisément, comme illustrée notamment sur les figures 1A et 2, la chambre d'alimentation 140 comporte des première et deuxième parois en pente 141 et 142 présentes respectivement sur les première et deuxième parties semi-annulaires 111 et 112 de l'enceinte 110. Les parois en pente 141 et 142 forment ensemble un conduit dans la chambre d'alimentation dont la section de passage rétrécit progressivement entre le port d'entrée 120 et la sortie de distribution 150 de la chambre d'alimentation 140. Cette géométrie permet de faciliter l'extraction de matériaux visqueux.

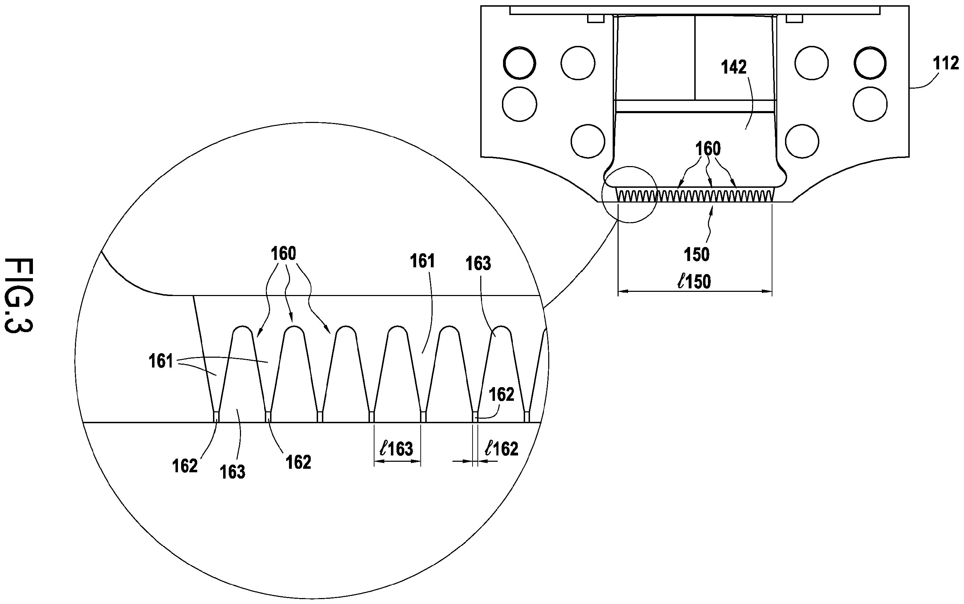

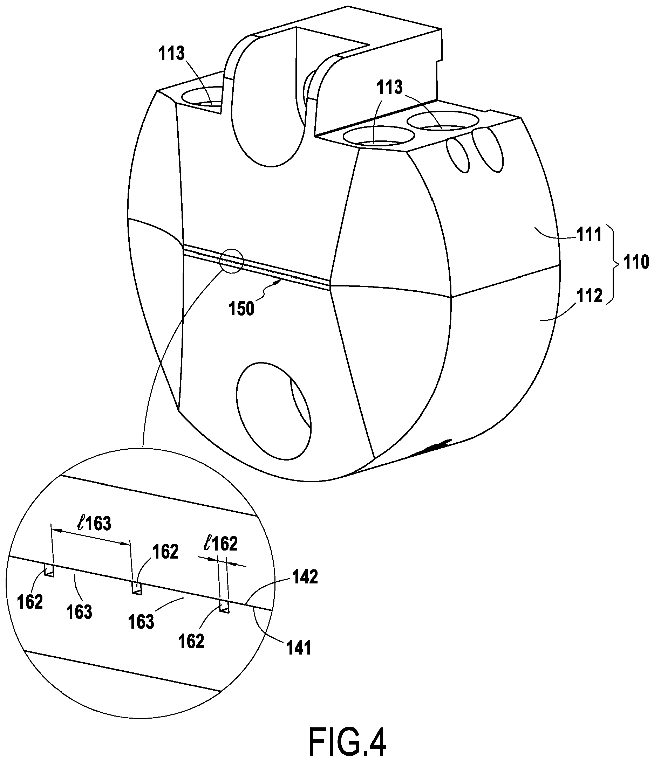

Conformément à l'invention, la sortie de distribution 150 comprend une pluralité de buses d'extrusion 160. Comme illustrée sur les figures 3 et 4, chaque buse d'extrusion 160 comprend un canal d'extrusion 161 en communication directe avec la chambre d'alimentation 140 et un orifice de sortie 162 au niveau d'une partie distale du canal d'extrusion.

Les buses d'extrusion 160 sont disposées adjacentes les unes aux autres sur toute la longueur de sortie de distribution 150. Les buses 160 sont alignées suivant une direction rectiligne. Dans l'exemple décrit ici, les canaux d'extrusion 161 et les orifices de sortie 162 des buses 160 sont formés au niveau d'un bord inférieur 1420 de la paroi 142 de la deuxième partie semi-annulaire 112, par exemple par usinage par gravure laser dans l'épaisseur de la paroi. Lors de l'assemblage des première et deuxième parties semi-annulaires 111 et 112 de l'enceinte 110, un bord inférieur 1410 de la paroi 141 de la première partie semi-annulaire 111 vient se plaquer sur des portions de surépaisseur 163 présentes entre chaque buse 160 sur le bord inférieur 1420, ces portions de surépaisseurs correspondant aux portions non usinées du bord 1420. Le bord inférieur 1410 recouvre les canaux d'extrusion 161 et les orifices de sortie 162 qui constituent alors les seuls passages au niveau de la sortie de distribution 150. Comme décrit ci-après, la pluralité de buses 160 permet de délivrer simultanément une pluralité de filaments adjacents.

Les canaux d'extrusion 161 présentent une section de passage qui se rétrécit progressivement entre le volume interne de la chambre d'alimentation 140 et les orifices de sortie 162, ce qui facilite en particulier l'extrusion de matériaux visqueux.

Toujours comme illustrés sur les figures 3 et 4, les orifices de sortie 162 présentent une largeur déterminée I₁₆₂ qui définit la largeur ou le diamètre des filaments déposés par la tête d'extrusion 100. Les orifices de sortie 162 des buses 160 présente une largeur I₁₆₂ comprise entre 50 µm et 700 µm.

La distance ou l'espacement entre chaque orifice de sortie 162 qui définit la distance entre des filaments adjacents déposés par la tête d'extrusion 100 est déterminé par la largeur I₁₆₃ des portions de surépaisseur 163 présente entre deux orifices de sortie 162. La distance I₁₆₃ entre deux orifices de sortie 162 adjacents est comprise entre 50 µm et 700 µm.

La distance I₁₆₃ est définie en fonction de la largeur ou du diamètre des filaments déposés et de l'espacement souhaité entre les filaments déposés. La distance I₁₆₃ peut être définie de manière à ce que les filaments déposés soient en contact les uns avec les autres ou, au contraire, de manière à ménager un espacement déterminé entre les filaments déposés. Dans ce dernier cas, la distance I₁₆₃ permet de contrôler la porosité des revêtements ou des pièces fabriquées.

Comme illustré sur la figure 5, la tête d'extrusion 100 est destinée à être couplée à un dispositif de délivrance 200 configuré pour injecter sous pression un matériau à extruder dans la chambre d'alimentation 140 de la tête 100 via le port d'entrée 120. Le dispositif 200 comprend par exemple un piston hydraulique (non représenté sur la figure 5) configuré pour exercer sur un matériau visqueux une force suffisante pour extruder le matériau par les buses 160.

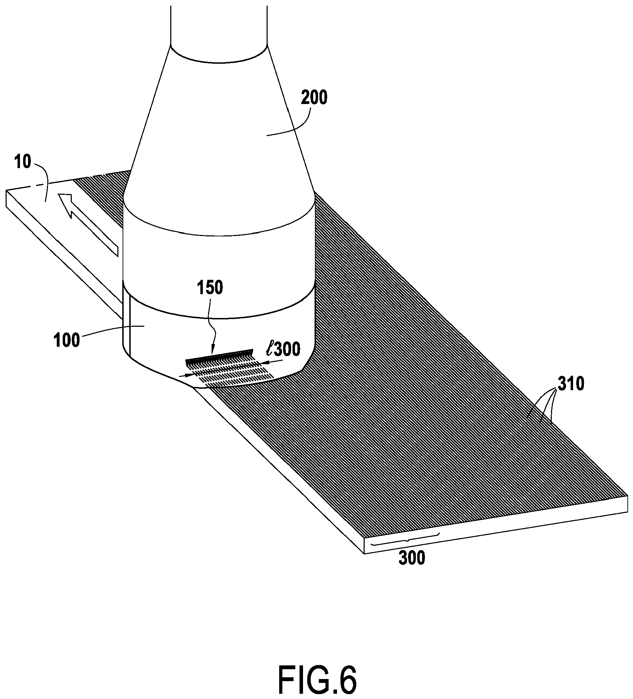

La figure 6 montre le dépôt de couches ou bandes 300 adjacentes chacune formées par un seul passage de la tête d'extrusion 100 sur une surface 10. Chaque bande 300 est constituée d'une pluralité de filaments ou fil 310 déposés simultanément sur la surface 10 par les buses d'extrusion 160 présentes à la sortie de distribution 150 de la tête 100. La largeur I₃₀₀ d'une bande 300 (figure 6) correspond à la largeur I₁₅₀ sur laquelle s'étend la pluralité de buses d'extrusion 160 (figure 3).

Le matériau extrudé par la tête 100 peut être de différentes natures. Il peut notamment consister en une résine thermodurcissable chargée ou non.

Comme décrit précédemment, l'enceinte 110 de la tête d'extrusion 100 est démontable car elle est formée par des parties semi-annulaires 111 et 112 fixées entre elles par des vis de serrage 113. La pluralité de buses 160 est présente sur la deuxième partie 112 qui est amovible. Cela permet de faciliter le nettoyage des buses 160 notamment en cas de bouchage de celles-ci.

Toutefois, l'enceinte de la tête d'extrusion délimitant la chambre d'alimentation et comportant la pluralité de buses d'extrusion peut également être réalisée en une seule pièce par fabrication additive par exemple.

La surface 10 peut correspondre à un support pour la fabrication d'une pièce par fabrication additive ou à une surface d'une pièce sur laquelle on souhaite former un revêtement par fabrication additive.

La tête d'extrusion de l'invention permet de déposer simultanément plusieurs filaments adjacents de matériau de manière à former une bande de matériau en un seul passage. La tête d'extrusion peut être utilisée pour déposer des bandes de matériau sur des surfaces de différentes géométries et en particulier des surfaces gauches.

## Revendications

1. Tête d'extrusion (100) pour fabrication additive comprenant une enceinte (110) délimitant une chambre d'alimentation (140), l'enceinte comportant au moins un port d'entrée (120) débouchant dans la chambre d'alimentation (140) et configuré pour recevoir un matériau à extruder sous pression et une pluralité de buses d'extrusion (160), chaque buse étant en communication avec ladite chambre d'alimentation et débouchant à l*'*extérieur de l'enceinte via un orifice de sortie (162), les buses de la pluralité de buses étant disposées adjacentes les unes par rapport aux autres avec un espacement déterminé (I163) entre chaque orifice de sortie de buse **caractérisée en ce que** la pluralité de buses (160) est présente sur un élément amovible (112) de l'enceinte (110).

2. Tête d'extrusion selon la revendication 1, dans laquelle chaque buse de la pluralité de buses (160) comporte un canal d'extrusion (161) en communication directe avec la chambre d'alimentation (140), le canal d'extrusion comportant une partie ayant une section de passage se rétrécissant progressivement jusqu'à l'orifice de sortie (162).

3. Tête d'extrusion selon la revendication 1 ou 2, dans laquelle l'orifice de sortie (162) de chaque buse présente une largeur (I162) comprise entre 50 µm et 700 µm.

4. Tête d'extrusion selon la revendication 1 ou 2, dans laquelle la distance (I131) entre deux orifices de sortie (162) adjacents est comprise entre 50 µm et 700 µm.

5. Système de fabrication additive par extrusion comprenant un dispositif de délivrance (200) sous pression d'un matériau et une tête d'extrusion (100) selon l'une quelconque des revendications 1 à 4 reliée au dispositif de délivrance, le dispositif de délivrance étant configuré pour injecter sous pression un matériau à extruder dans la chambre d'alimentation (140) de la tête d'extrusion.

6. Procédé de fabrication additive comprenant l'injection sous pression d'un matériau à extruder dans une chambre d'alimentation (140) d'une tête d'extrusion (100) selon l'une quelconque des revendications 1 à 4 et le dépôt d'une pluralité de filaments adjacents (310) les uns aux autres par la tête d'extrusion, la pluralité de filaments formant une bande (300) ayant une largeur (l₃₀₀) correspondant sensiblement à la largeur (I₁₅₀) sur laquelle s'étend la pluralité de buses d'extrusion (160) de la tête d'extrusion.

## Patentansprüche

1. Extrusionskopf (100) für additive Herstellung, umfassend ein Gehäuse (110), das eine Versorgungskammer (140) begrenzt, wobei das Gehäuse mindestens eine Einlassöffnung (120) beinhaltet, die in die Versorgungskammer (140) mündet und dazu ausgestaltet ist, ein zu extrudierendes Material unter Druck aufzunehmen, und mehrere Extrusionsdüsen (160), wobei jede Düse mit der Versorgungskammer in Verbindung steht und über eine Auslassöffnung (162) außerhalb des Gehäuses mündet, wobei die Düsen der mehreren Düsen mit einem bestimmten Abstand (I163) zwischen jeder Düsenauslassöffnung benachbart zueinander angeordnet sind, **dadurch gekennzeichnet, dass**
die mehreren Düsen (160) an einem abnehmbaren Element (112) des Gehäuses (110) vorhanden sind.

2. Extrusionskopf nach Anspruch 1, wobei jede Düse der mehreren Düsen (160) einen Extrusionskanal (161) in direkter Verbindung mit der Versorgungskammer (140) beinhaltet, wobei der Extrusionskanal einen Teil beinhaltet, der einen Durchgangsabschnitt aufweist, der sich bis zu der Auslassöffnung (162) nach und nach verengt.

3. Extrusionskopf nach Anspruch 1 oder 2, wobei die Auslassöffnung (162) jeder Düse eine Breite (I162) aufweist, die zwischen 50 µm und 700 µm umfasst.

4. Extrusionskopf nach Anspruch 1 oder 2, wobei der Abstand (I131) zwischen zwei benachbarten Auslassöffnungen (162) zwischen 50 µm und 700 µm umfasst.

5. System zur additiven Herstellung durch Extrusion, umfassend eine Abgabevorrichtung (200) unter Druck eines Materials und einen Extrusionskopf (100) nach einem der Ansprüche 1 bis 4, der mit der Abgabevorrichtung verbunden ist, wobei die Abgabevorrichtung dazu ausgestaltet ist, ein zu extrudierendes Material unter Druck in die Versorgungskammer (140) des Extrusionskopfes einzuspritzen.

6. Verfahren zur additiven Herstellung, umfassend das Einspritzen eines zu extrudierenden Materials unter Druck in eine Versorgungskammer (140) eines Extrusionskopfes (100) nach einem der Ansprüche 1 bis 4 und Abscheiden mehrerer zueinander benachbarter Filamente (310) durch den Extrusionskopf, wobei die mehreren Filamente einen Streifen (300) mit einer Breite (l₃₀₀) bilden, die im Wesentlichen der Breite (I₁₅₀) entspricht, über die sich die mehreren Extrusionsdüsen (160) des Extrusionskopfes erstrecken.

## Claims

1. An extrusion head (100) for additive manufacturing comprising an enclosure (110) defining a supply chamber (140), the enclosure including at least one inlet port (120) opening into the supply chamber (140) and configured to receive a material to be extruded under pressure and a plurality of extrusion nozzles (160), each nozzle being in communication with said supply chamber and opening onto the exterior of the enclosure via an outlet orifice (162), the nozzles of the plurality of nozzles being arranged adjacent to one another with a determined spacing (I163) between each nozzle outlet orifice **characterized in that** the plurality of nozzles (160) is present on a removable element (112) of the enclosure (110).

2. The extrusion head according to claim 1, wherein each nozzle of the plurality of nozzles (160) includes an extrusion channel (161) in direct communication with the supply chamber (140), the extrusion channel including a portion having a passage cross section which shrinks progressively until the outlet orifice (162).

3. The extrusion head according to claim 1 or 2, wherein the outlet orifice (162) of each nozzle has a width (I162) comprised between 50 µm and 700 µm.

4. The extrusion head according to claim 1 or 2, wherein the distance (I131) between two adjacent outlet orifices (162) is comprised between 50 µm and 700 µm.

5. An extrusion-based additive manufacturing system comprising a dispensing device (200) for dispensing a material under pressure and an extrusion head (100) according to any one of claims 1 to 4 connected to the dispensing device, the dispensing device being configured to inject, under pressure, a material to be extruded into the supply chamber (140) of the extrusion head.

6. An additive manufacturing method comprising the injection under pressure of a material to be extruded into a supply chamber (140) of an extrusion head (100) according to any one of claims 1 to 4, and the deposition of a plurality of filaments (310) adjacent to one another by the extrusion head, the plurality of filaments forming a strip (300) having a width (l₃₀₀) corresponding substantially to the width (I₁₅₀) over which the plurality of extrusion nozzles (160) of the extrusion head extends.
